# FASCICULE DE BREVET EUROPEEN

(11) **EP 2 684 425 B1**
(45) Date de publication et mention de la délivrance du brevet: **22.04.2015**
(21) Numéro de dépôt: 12711759.6
(22) Date de dépôt: 06.03.2012
(51) Int. Cl.: H05B 37/02, H05B 33/08, F21L 4/00, F21V 23/00

(54) **LAMPE LED DOTEE D'UN DISPOSITIF D'ANALYSE D'IMAGE**
LED-LAMPE MIT LEISTUNGSREGELUNGSVORRICHTUNG
LED LAMP COMPRISING A POWER REGULATING DEVICE

(30) Priorité: 07.03.2011 EP 11368004; 12.12.2011 FR 1103794; 05.03.2012 FR 1200652
(43) Date de publication de la demande: 15.01.2014
(73) Titulaire: Zedel S.A., 38920 Crolles (FR)
(72) Inventeur: BOUFFAY, Boris, 38660 Saint Bernard du Touvet (FR); MAURICE, Alain, 38660 Saint Hilaire du Touvet (FR)
(74) Mandataire: Schuffenecker, Thierry
(86) Numéro de dépôt international: PCT/EP2012/000982
(87) Numéro de publication internationale: WO 2012/119754

(56) Documents cités:
- US-A1- 2002 015 097
- US-A1- 2005 099 798
- US-A1- 2007 098 391
- US-A1- 2008 198 586

## Description

### Domaine technique

La présente invention concerne les lampes dotées de diodes LED, et notamment une lampe frontale à LED comportant un dispositif de régulation de la puissance émise par la lampe.

### Etat de la technique

Les lampes frontales sont utilisées dans un grand nombre d'activités tant professionnelles, que sportives ou ludiques.

D'une manière générale, ces lampes sont destinées à permettre un éclairage de type "main libre" efficace, confortable et assurant une longévité maximale de la batterie.

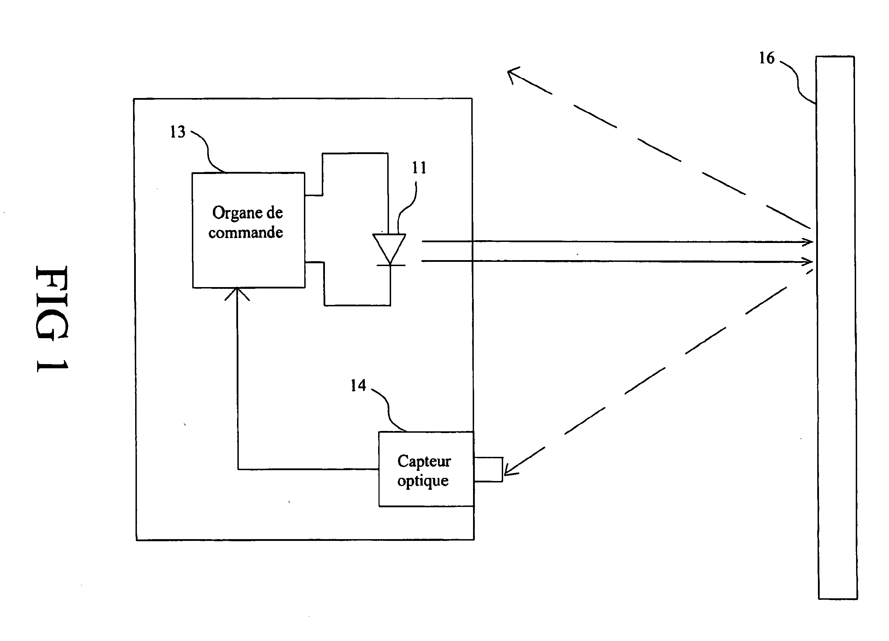

La demande de brevet FR2930706 en date du 24 Avril 2008 décrit une lampe d'éclairage auto-régulée utilisant un capteur de la lumière réfléchie par un objet éclairé par la lampe pour la régulation de l'intensité lumineuse. La figure 1 illustre une telle lampe qui comporte un capteur optique 14 logé dans le boîtier au voisinage de la diode électroluminescente LED 11 pour délivrer un signal représentatif de la lumière réfléchie par la surface d' un objet 16 éclairé, et transmettre ledit signal à une deuxième entrée d' un organe de commande 13 pour réguler automatiquement la puissance de la LED en fonction d'un seuil prédéterminé. De cette manière, une régulation automatique du faisceau lumineux émis par la lampe est effectuée sans action manuelle pour adapter l'éclairage à l'environnement, tout en gérant la consommation en énergie.

Ainsi, grâce à ce procédé, l'intensité lumineuse varie en fonction de l'objet éclairé, s'accroissant lorsque l'utilisateur regarde "au loin" et se réduisant au contraire dans le cas d'une vision de près, notamment lorsque le flux lumineux est dirigé sur un objet "proche" de la lampe.

Ce procédé accroît de manière significative le confort d'utilisation de la lampe ainsi que la longévité de la batterie.

Néanmoins, des besoins nouveaux apparaissent dans la régulation de l'intensité lumineuse, lesquels peuvent ne peuvent être satisfaits avec la lampe précitée.

De manière générale, il est souhaitable de pouvoir disposer de mécanismes de régulation plus sophistiqués qui soient de nature à répondre aux nouveaux besoins exprimés par les utilisateurs des lampes frontales, qu'il s'agisse de sportifs, de militaires, de professionnels, ou simplement d'amateurs "éclairés".

C'est précisément l'un des objets de la présente invention que de proposer une technique alternative permettant de gérer la consommation électrique de la lampe frontale.

La demande WO 01/99474 décrit un procédé de commande de l'allumage au sein d'une pièce d'un immeuble comportant la mesure d'une radioélectromagnétique, telle que la lumière visible ou infrarouge.

### Résumé de l'invention

C'est un but de la présente invention que de réaliser une lampe frontale dotée d'un mécanisme de régulation avancé permettant de renforcer la sécurité, d'ajouter de nouvelles fonctionnalités mais aussi d'accroître l'autonomie de la batterie.

C'est un autre but de la présente invention que de réaliser un procédé de commande de l'intensité lumineuse d'une lampe frontale permettant une commande et une régulation améliorées par rapport à celles connues, dans le but d'accroître le caractère pratique de la lampe, notamment en l'adaptant à de multiples usages et profils spécifiques.

C'est un autre but de la présente invention consiste à réaliser une lampe frontale dotée de fonctionnalités nouvelles utilisables dans un grand nombre d'applications.

Ces buts sont atteints au moyen d'une lampe frontale telle que définie dans la revendication 1, comportant:
- une source lumineuse comportant une ou plusieurs diodes de type LED;
- un module de puissance pour générer une alimentation électrique de ladite source lumineuse, ledit module étant commandé par une information ou un signal de commande;
- un module de commande pour le réglage de l'intensité lumineuse générée par ladite source lumineuse.

La lampe est caractérisée en ce que ledit module de commande comporte un capteur d'image générant au moins une image de la zone éclairée par ladite source lumineuse et des moyens de traitement de ladite image dans le but de générer l'information ou le signal de commande.

Dans un mode de réalisation particulier, les moyens de traitement déterminent une zone spécifique d'asservissement (ZSA) au sein de ladite image, et faisant l'objet d'un traitement d'images de manière à générer l'information ou le signal de commande.

De préférence, les moyens de traitement comportent un processeur d'images effectuant un calcul de la luminosité moyenne des pixels représentatifs de ladite image à des fins de comparaison à un seuil dans le but de générer l'information ou le signal de commande.

Dans un mode de réalisation particulier, le processeur d'images effectue une analyse de contraste sur ladite image dans le but d'une détection de brouillard, de buée et/ou de particules de fumée.

Dans un autre mode de réalisation particulier, la lampe comporte un second capteur générant une seconde information représentative de l'intensité lumineuse réfléchie de la zone éclairée, la commande de ladite source lumineuse résultant conjointement dudit traitement numérique des pixels et de ladite seconde information de réflexion.

De préférence, le processeur d'images effectue la détection d'une bande de pixels de luminosité supérieure à un seuil, approximativement verticale, les pixels correspondant à ladite bande de pixel étant exclus de la dite zone spécifique d'exposition déterminée par ledit processeur d'image.

Alternativement, le processeur d'image permet également la détection de passage périodique de mains et/ou la détection de sources externes comme par exemple des flocons de neige ou des phares automobiles, dans le but d'exclure de la zone ZSA les pixels correspondants et susceptibles de perturber le processus de régulation.

De préférence, la détection de brouillard, de buée et/ou de particules de fumée est améliorée au moyen d'une lampe infra-rouge (IR) comportant un axe décentré par rapport à l'axe de ladite source lumineuse, et de moyens de commande de la lampe IR de manière à générer un faisceau IR hors production de lumière visible par ladite source lumineuse. Des moyens de détection de lumière infra-rouge réfléchie permettent de détecter une information représentative de la présence de brouillard, de buée et/ou de particules de fumée.

De préférence, la lampe comporte également un capteur de vitesse et/ou d'accélération dans le but de générer l'information ou le signal de commande.

De préférence, la lampe comporte des moyens de configuration de la lampe, notamment suivant un ou plusieurs profils prédéterminés, tels que notamment un port USB permettant la communication avec un ordinateur, une tablette tactile, ou un téléphone intelligent.

De préférence, la lampe est une lampe frontale.

L'invention permet également la réalisation d'un procédé de réglage de l'intensité lumineuse générée par une lampe comportant une ou plusieurs diodes LED, un module de puissance commandable pour l'alimentation des lampes LEDs et un module de commande pour le réglage de l'intensité lumineuse générée par la lampe, ledit procédé comportant les étapes suivantes:
- la génération d'une image de la zone éclairée par la lampe au moyen d'un capteur d'images;
- le stockage de l'image au sein d'une mémoire de stockage;
- le traitement de l'image en vue de générer une information ou un signal de commande du module de puissance dans le but de réguler la puissance lumineuse émise par celle-ci.

De préférence, le procédé comporte en outre les étapes:
- calcul de la luminosité moyenne des pixels de ladite image ou d'une zone spécifique d'asservissement de ladite image ;
- la comparaison du résultat dudit calcul avec un seuil prédéterminé;
- la génération d'une information ou d'un signal de commande destiné à accroître l'intensité lumineuse des LED lorsque ledit résultat est inférieur au seuil prédéterminé;
- la génération d'une information ou d'un signal de commande destiné à réduire l'intensité lumineuse des LED lorsque ledit résultat est supérieur au seuil prédéterminé.

Dans un mode de réalisation particulier, le seuil prédéterminé est choisi pour correspondre à la sensibilité d'un oeil humain.

### Description des figures

D'autres caractéristiques, but et avantages de l'invention apparaîtront à la lecture de la description et des dessins ci-après, donnés uniquement à titre d'exemples non limitatifs. Sur les dessins annexés :
La figure 1 illustre un exemple d'une lampe connue comportant une régulation de la consommation électrique.
La figure 2 illustre un premier mode de réalisation d'une lampe conforme à la présente invention, permettant de réguler la consommation électrique.
La figure 3 illustre un premier mode de réalisation d'un procédé de commande et de réglage de l'intensité lumineuse générée par une lampe conforme à la présente invention.
La figure 4 illustre un second mode de réalisation mettant en oeuvre une zone spécifique d'asservissement.
Les figures 5 et 6 illustrent deux modes de réalisation d'un traitement de la luminosité, respectivement au sein de l'image totale et d'une zone spécifique de cette dernière.
Les figures 7 et 8 illustrent deux modes de réalisation d'un traitement du contraste, respectivement au sein de l'image totale et d'une zone spécifique de cette dernière.
La figure 9 illustre un mode de réalisation d'un procédé de commande de la lampe applicable à un profil de type "escalade/spéléologie".
La figure 10 illustre un autre mode de réalisation d'un procédé de commande de la lampe applicable à un profil de type "randonnée/jogging".
La figure 11 illustre une variation du procédé de la figure 10, tenant également compte d'un critère de vitesse et/ou d'accélération.
La figure 12a illustre un mode de réalisation d'une lampe comportant un capteur amélioré doté d'un capteur infra-rouge pour la détection de brouillard/buée.
La figure 12b illustre le procédé de fonctionnement du mode de réalisation de la figure 12a.

### Description des modes de réalisation préférés

Les exemples qui vont être décrits à présent sont particulièrement adaptés à la réalisation d'une lampe d'éclairage dotée de diodes LED de puissance, et notamment une lampe frontale.

Bien évidemment, il ne s'agit là que d'exemples non limitatifs et un homme du métier pourra adapter l'invention à d'autres dispositifs lumineux pour en accroître la sécurité de fonctionnement.

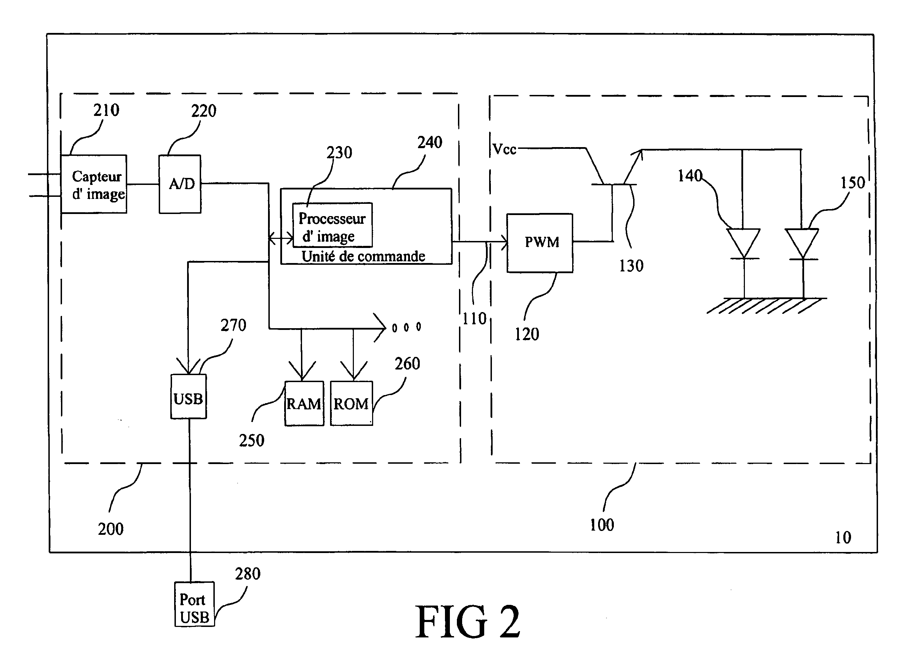

La figure 2 illustre l'architecture générale d'un premier mode de réalisation d'une lampe 10 - supposée frontale - comportant des moyens sophistiqués de commande de l'intensité lumineuse. La lampe 10 comprend un module de puissance 100 associé à un module de commande 200.

Le module de puissance 100 comporte spécifiquement tous les composants que l'on rencontre conventionnellement dans une lampe d'éclairage à LEDs pour la production d'un faisceau lumineux de forte intensité.

A cet égard, le circuit comporte une batterie (non représentée sur la figure), laquelle génère une tension d'alimentation Vcc, une ou plusieurs diodes électroluminescentes DEL (ou LED dans la littérature anglo-saxonne - deux diodes 140 et 150 étant illustrées à titre d'exemple) alimentées par un commutateur de puissance 130 de type à semiconducteur tel qu'un transistor bipolaire, un transistor FET (*Field Effect Transistor*) ou MOS (*Metal Oxyde Semiconductor*) ou MOSFET. Afin de réduire les pertes Joules, l'on vient commander le commutateur 130 au moyen d'une Modulation en Largeur d'Impulsion MLI (ou *Pulse Width Modulation* dans la littérature anglo-saxonne), qui est bien connue d'un homme du métier et similaire à celle que l'on connaît dans les circuits audio de classe D. Cette modulation MLI ou PWM est générée au moyen d'un circuit PMW 120 commandé lui-même, sur son entrée 110, par un signal de commande. D'une manière générale, l'on notera que le terme "*signal*" mentionné précédemment renvoie à une grandeur électrique - courant ou tension - permettant de provoquer la commande du module de puissance. Il ne s'agit cependant ici que d'un exemple particulier de réalisation, étant entendu qu'il sera possible de substituer au "*signal de commande* 110" une simple "*information de commande*", par exemple une information logique qui pourra être stockée dans un registre ou dans de la mémoire et ainsi transmise par tout moyen approprié au module de commande 100 afin de produire le flux lumineux correspondant. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un "signal de commande 110", l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 100 - commutateurs et circuits - sont bien connus d'un homme du métier et l'exposé sera délibérément allégé à cet égard dans une souci de concision. De même, le lecteur sera renvoyé aux ouvrages généraux traitant des divers aspects de la modulation MLI (ou PWM).

Le module de commande 200 comporte une unité de commande 240, laquelle génère le signal (ou l'information) de commande transmis(e) à l'entrée 110 du module de puissance 100 dans le but du pilotage du circuit PWM 120 et, finalement, le réglage de l'intensité lumineuse produite par les diodes LEDs.

Dans le mode de réalisation de la figure 2, l'unité de commande 240 comporte en outre un processeur d'image 230 communiquant via des bus d'adresses, de données et de commande conventionnels avec de la mémoire RAM 250, de la mémoire ROM ou EEPROM etc... 260.

L'unité de commande 200 comporte en outre un module de capture d'image 210 qui est représenté dans la figure 2 sous la forme d'un capteur analogique, tel que par exemple un module vidéo ou une caméra analogique, doté de son système optique. L'unité 200 comporte ensuite un convertisseur analogique/numérique 220 permettant la conversion des signaux analogiques générés par le capteur d' image 210 en une information numérique qui pourra ensuite être rendue accessible au processeur d'image 230 via les bus de données, d'adresses etc...

Dans un mode de réalisation particulier, l'on pourra opter d'emblée pour une structure complètement numérique et substituer à l'ensemble 210-220 un capteur numérique, tel qu'un capteur CCD (*Charge Coupled Device* dans la littérature anglo-saxonne) bien connu dans le domaine de la photographie numérique. L'on disposera alors directement d'une image pixelisée, par exemple de dimension 640x 480 pixels. Chacun des pixel I(x,y) se verra affectée une valeur représentative de la luminosité de l'image, voire ses composantes de couleurs.

Dans un mode de réalisation préféré, le capteur d'image présente un axe coïncidant avec l'axe des diodes LEDs en sorte que l'image, saisie par le capteur 210, correspondra à la zone éclairée par ces dernières.

Dans un autre mode de réalisation, un port USB 280 est accessible via un module USB 270 inclus dans l'unité de commande et connecté au bus, permettant l'échange de données suivant le standard USB. Particulièrement, l'interface USB permettra comme on le verra ci-après, le stockage de paramètres de réglage et de profils au sein de la lampe.

De cette manière, l'unité de commande peut communiquer avec un dispositif de traitement de données tel qu'un ordinateur, un ordinateur portable, une tablette tactile, un assistant personnel et voire même un téléphone intelligent (*Smartphone* suivant la littérature anglo-saxonne).

Il est à noter que le port USB n'est qu'un exemple illustratif d'un moyen de communication entre la lampe et un ordinateur, et qu'un homme du métier pourra envisager tout autre moyen de communication, notamment sans fil (*bluetooth, wifi etc*...). Dans un mode de réalisation particulier, la lampe frontale disposera même de sa propre adresse IP (*Internet Protocol*) de manière à pouvoir être aisément configurée, par exemple au moyen d'un serveur *web* dédié.

Une telle communication est particulièrement avantageuse notamment pour l'échange de données de configuration, tels que des « profils » qui permettent de venir stocker ou sélectionner, en tant que de besoin, des données de réglage de la lampe en fonction de son utilisation souhaitée par son propriétaire, et notamment pour mettre en oeuvre les exemples de diagrammes fonctionnels qui seront décrits ci-après. Alternativement ou cumulativement, les "profils" permettent, comme on le verra ci-après, de venir activer des procédures ou modes spécifiques de fonctionnement, notamment les modes statiques (débrayage de la régulation) ou dynamique (activation de la régulation).

L'on décrit à présent plus spécifiquement le fonctionnement de l'architecture présentée précédemment de manière à permettre une régulation particulièrement opportune de la puissance d'émission des LEDs.

En effet, contrairement à la lampe connue, dans laquelle la puissance d'émission était commandée en fonction de la luminosité réfléchie par l'objet éclairé, l'on se propose à présent de venir commander la puissance d'émission en fonction d'un traitement logique de l'image captée par le capteur 210 et transmise au processeur d'image 230. Plus spécifiquement, l'on pourra venir combiner le traitement d'images à une information représentative du signal réfléchie de l'objet éclairé, déjà connue de la lampe précitée.

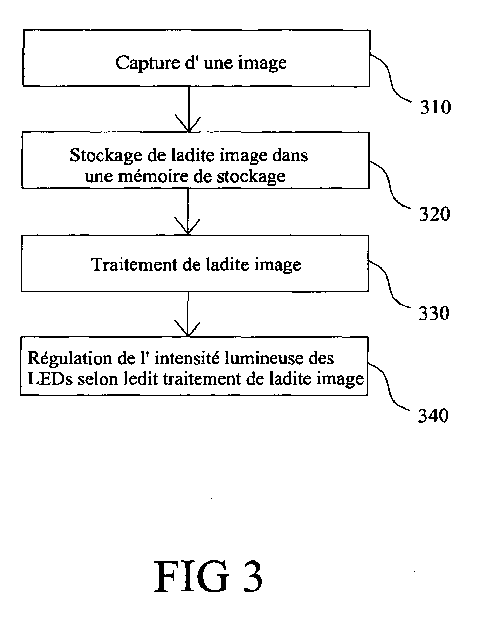

Un mode de réalisation du procédé est illustré plus spécifiquement dans la **figure 3****,** lequel procédé démarre par une étape 310 au cours de laquelle une image fait l'objet d'une capture ou d'une saisie via le capteur d'image 210.

Puis, dans une étape 320, l'image est transférée via les bus de données et d'adresses du module de commande 100 et le procédé effectue un stockage de ladite image dans une mémoire de stockage comme la mémoire RAM 250 illustrée dans la figure 2.

Puis, dans une étape 330, le procédé effectue un traitement logique de l'image stockée au moyen du processeur d'image 230. Dans un mode de réalisation, chaque image sera traitée séparément de manière à générer une information (ou un signal) de commande destinée au module de puissance 100. Alternativement, le processeur d'images effectue un traitement collectif ou en lot de plusieurs images stockées en mémoire de manière à générer, périodiquement, une information (ou un signal) de commande destinée au module de puissance 100 pour assurer un asservissement périodique de la puissance lumineuse de la lampe.

D'une manière générale, l'on pourra envisager de multiples traitements logiques et numériques des images saisies.

En particulier, un homme du métier pourra décider d'effectuer un traitement séquentiel des différents pixels composant chacune des images ainsi que celui de ses différentes composantes de couleur, de luminosité, de contraste etc... On pourra envisager un traitement complet sur l'image ou seulement sur une zone particulière (que l'on désignera ci-après sous l'appellation zone spécifique d'asservissement ZSA). En outre, le procédé pourra également comporter un successif de plusieurs images de manière à réaliser une intégration dans le temps des différentes composantes de l'image et d'en déduire une information statistique qui pourra servir à la commande de la puissance lumineuse des lampes LED.

De manière encore plus sophistiquée, l'on pourra également englober dans le traitement logique et/ou numérique de l'image les algorithmes de reconnaissance de formes et/ou d'objets utiles à la génération d'une information ou d'un signal de commande à destination du module de puissance 100, comme ce que l'on décrira plus particulièrement ci-après.

Au terme de ce traitement d'image effectué dans l'étape 330, le procédé poursuit ensuite, dans une étape 340, par la génération et la transmission de l'information (ou du signal) de commande vers le module de puissance 200, lequel peut alors produire un flux lumineux parfaitement asservi et régulé en fonction du résultat du traitement numérique effectué par le processeur d'image 230.

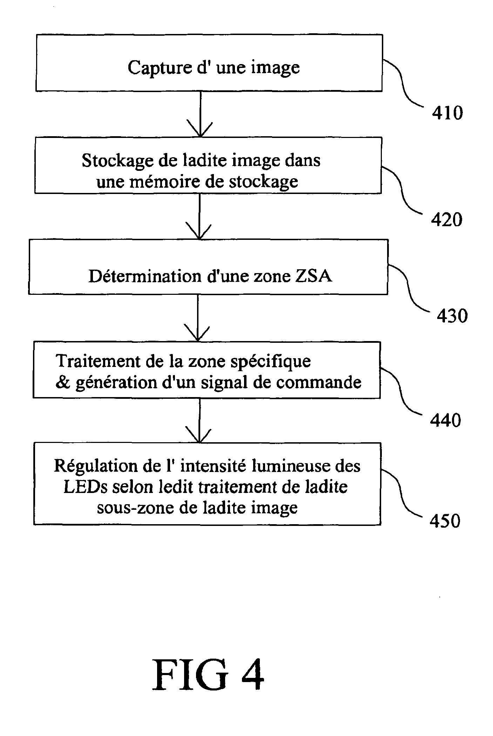

La **figure 4** illustre un second mode de réalisation d' un procédé de commande et/ou de régulation de l'intensité lumineuse des LEDs, dans lequel le processeur d'images ne traite qu'une partie de l'image, définie ci-après sous l'appellation zone spécifique **d'asservissement (ZSA).**

Le procédé démarre par une étape 410 où, le capteur d' image 210 capture une image.

Puis, dans une étape 420, le procédé poursuit par une stockage de ladite image dans une mémoire de stockage comme la mémoire RAM 250.

Puis, dans une étape 430, le procédé poursuit par la détermination d'une zone spécifique d'asservissement (ZSA) de l'image au moyen du processeur d' image 230.

Puis, dans une étape 440, le procédé poursuit par un traitement de ladite zone ZSA au moyen du processeur d'images 230, de manière à générer une information ou un signal de commande.

Puis, dans une étape 450, le procédé poursuit par la transmission de l'information ou du signal de commande à destination du module de puissance 100 de manière à produire une commande de l'intensité lumineuse des LEDs 140, 150 en fonction du résultat du traitement effectué lors de l'étape 440. L'on parvient, de cette manière à régler l'intensité lumineuse des LEDs en fonction d'une partie seulement des informations perçues par le capteur d'images, correspondant à la zone ZSA définie dans l'étape 430.

L'on perçoit ainsi la grande souplesse du procédé qui permet de multiples possibilités d'asservissement et de régulation de la puissance de la lampe.

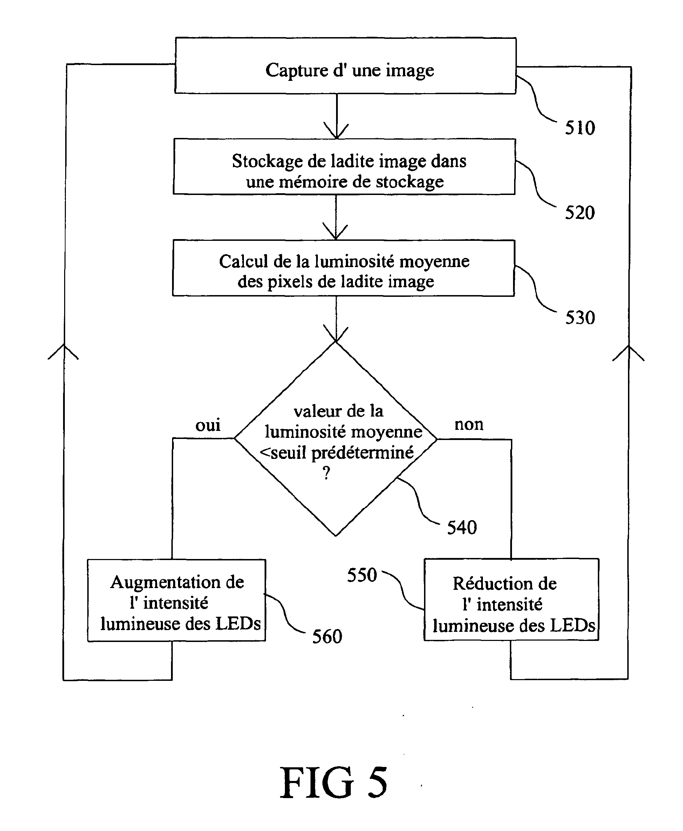

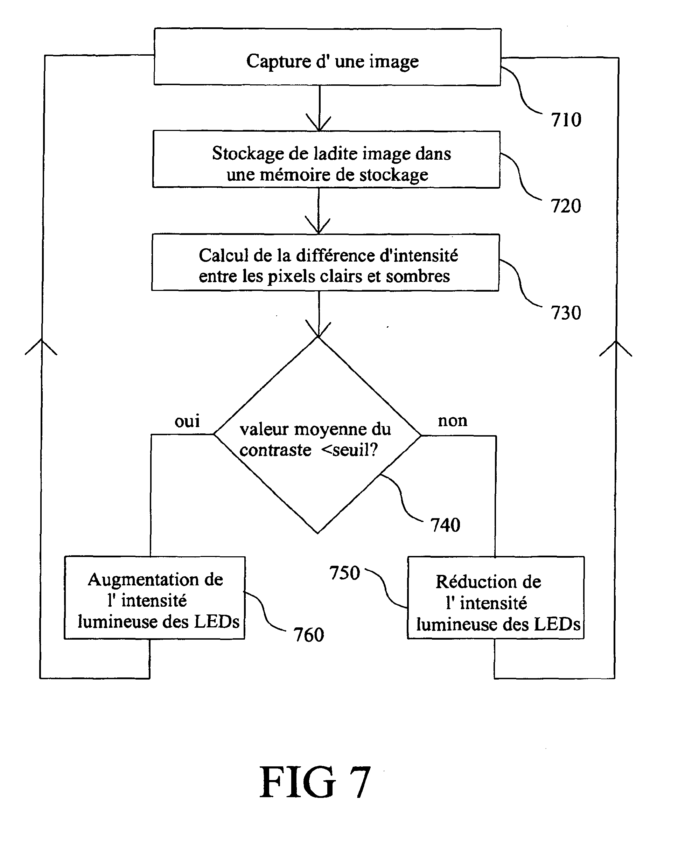

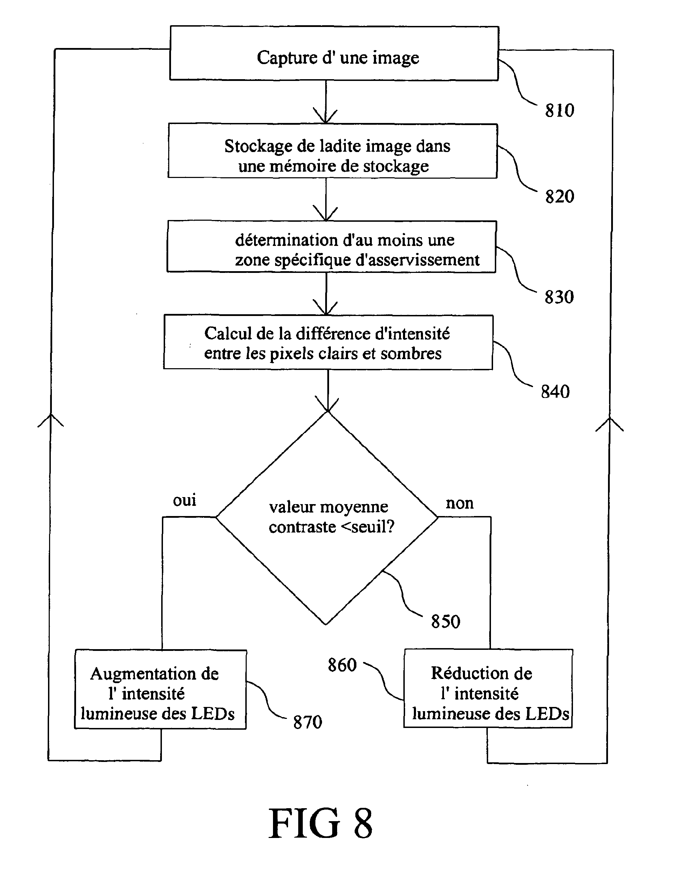

A titre d'illustration, l'on va plus particulièrement décrire un traitement de la luminosité dans les figures 5-6, et un traitement plus spécifique du contraste avec les figures 7 et 8.

Le procédé de la **figure 5** démarre par une étape 510 où, le capteur d'image 210 capture une image.

Puis, dans une étape 520, le procédé poursuit par une stockage de ladite image dans la mémoire de stockage.

Puis, dans une étape 530, le procédé poursuit par un calcul de la luminosité moyenne des pixels de ladite image au moyen du processeur d'image 230.

Puis, dans une étape 540, un test est effectué par le processeur d'image 230, à savoir une comparaison entre la valeur de la luminosité moyenne des pixels de ladite image et une valeur d'un seuil prédéterminé stockée dans la mémoire RAM 240. Dans un mode de réalisation, le seuil prédéterminé est choisi pour correspondre à la sensibilité de l'oeil humain de manière à rendre une régulation aussi naturelle que possible pour un utilisateur moyen.

Lorsque la valeur moyenne de la luminosité excède le seuil prédéterminé, le procédé poursuit avec une étape 550, où une information (ou un signal de commande) est générée et transmise au module de puissance de manière à réduire l'intensité lumineuse générée par les LEDs.

Le procédé retourne ensuite à l'étape 510 où le capteur d'image 210 capture une nouvelle image.

En revanche, lorsque, lors du test de l'étape 540, la valeur de la luminosité moyenne des pixels de ladite image est inférieure que le seuil prédéterminé, le procédé poursuit avec une étape 560 au cours de laquelle ladite unité de commande 240 génère une information ou un signal de commande destiné à augmenter l'intensité lumineuse générée par les LED.

Le procédé retourne ensuite à l'étape 510 où le capteur d' image 210 capture une nouvelle image.

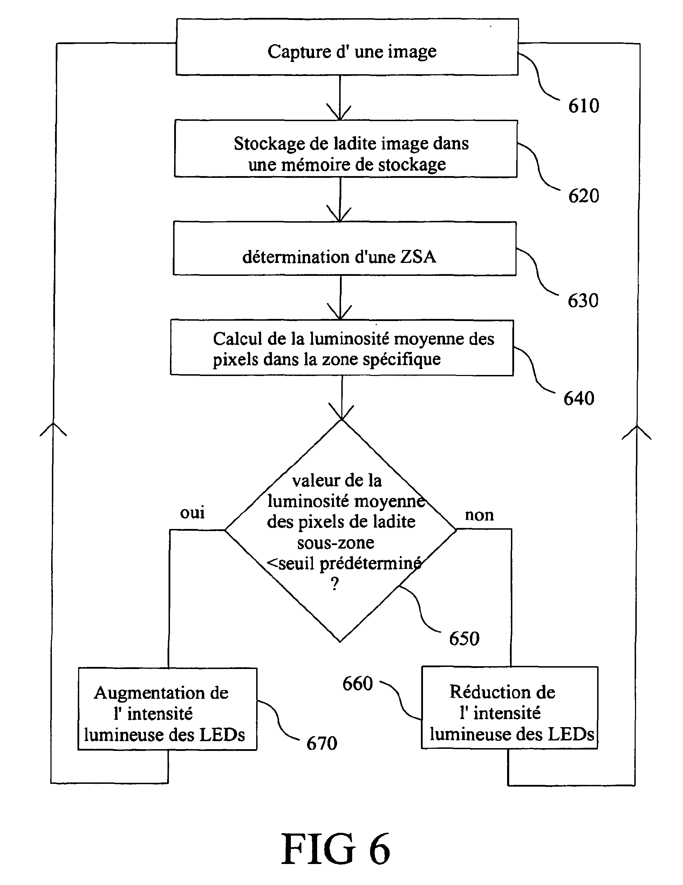

La **figure 6** illustre un mode de réalisation d'un procédé de commande de l'intensité lumineuse de la lampe mettant plus particulièrement en oeuvre une **zone spécifique d'asservissement (ZSA).**

Le procédé démarre par une étape 610 où, le capteur d' image 210 capture une image.

Puis, dans une étape 620, le procédé poursuit par une stockage de ladite image dans une mémoire de stockage comme la mémoire RAM 250 et la mémoire ROM 260 illustrés à la figure 2.

Puis, dans une étape 630, le procédé poursuit par la détermination de la zone spécifique d'asservissement (ZSA) de l'image au moyen du processeur d'images 230.

Puis, dans une étape 640, le procédé poursuit par un calcul de la luminosité moyenne des pixels de ladite zone ZSA de ladite image au moyen du processeur d' image 230.

Puis, dans une étape 650, un test est effectué par le processeur d'images 230, à savoir une comparaison entre la valeur de la luminosité moyenne des pixels de ladite zone ZSA de ladite image et une valeur prédéterminée d'un seuil stocké dans la mémoire.

Puis, dans une étape 660, le procédé poursuit par la génération d'une information ou d'un signal de commande par ladite unité de commande 240 destiné à réduire l'intensité lumineuse générée par les LEDs lorsque la valeur de la luminosité moyenne des pixels de ZSA excède le seuil prédéterminé.

Le procédé retourne ensuite à l'étape 610 où le capteur d' image 210 capture une nouvelle image.

Si, lors du test de l'étape 640, la valeur de la luminosité moyenne des pixels de ladite zone ZSA est inférieure au seuil prédéterminé, le procédé poursuit avec une étape 670 au cours de laquelle est générée une information ou un signal de commande destiné à l'accroissement de l'intensité lumineuse générée par les LEDs.

Le procédé retourne ensuite à l'étape 610 pour la capture d'une nouvelle image.

Le processeur d'images 230 opère par conséquent un traitement d'images approprié de manière à en dériver une information de commande ou un signal de commande déterminant la puissance d'émission des LEDs et par conséquent la luminosité de la lampe. En pratique, les variations de luminosité pourront suivre de manière continue ou discrète. Dans les réalisation les plus simples, l'on pourra envisager une modulation simplifiée de la puissance d'émission suivant un certain nombre de paliers permettant une gradation progressive de la puissance, avec des valeurs de 100%, 80%, 60% etc... de la puissance nominale... Dans d'autre réalisations plus sophistiquées, l'on pourra envisager un véritable asservissement d'ordre linéaire permettant une variation continue de la puissance d'émission en fonction de la luminosité moyenne dérivée du traitement d'images.

Au delà du traitement de la seule **luminosité**, le procédé pourra en-outre intégrer un traitement du **contraste** tel que celui qui est illustré en référence à la **figure 7****,** lequel démarre par une étape 710 où, le capteur d'image 210 capture une image.

Puis, dans une étape 720, le procédé poursuit par une stockage de ladite image dans la mémoire de stockage.

Puis, dans une étape 730, le procédé poursuit par un calcul de la différence d'intensité entre les pixels clairs et les pixels sombres au moyen du processeur d'images 230, de manière à générer une information représentative du contraste de l'image, par exemple la valeur moyenne du contraste sur l'ensemble de l'image capturée.

Puis, dans une étape 740, un test est effectué par le processeur d'image, à savoir une comparaison entre la valeur moyenne du contraste et une valeur prédéterminée d'un seuil stocké dans la mémoire.

Lorsque la valeur moyenne du contraste excède le seuil prédéterminé, le procédé poursuit avec une étape 750, où une information ou un signal de commande est généré(e) et transmis(e) au module de puissance 100 de manière à réduire l'intensité lumineuse générée par les LEDs.

Le procédé retourne ensuite à l'étape 710 pour la capture d'une nouvelle image.

Si, lors du test de l'étape 740, la valeur moyenne du contraste apparaît inférieure au seuil prédéterminé, le procédé poursuit avec une étape 760 au cours de laquelle ladite unité de commande 240 génère une information ou un signal de commande destinée à augmenter l'intensité lumineuse générée par les LED.

Le procédé retourne ensuite à l'étape 710 pour la capture d'une nouvelle image.

Comme on le voit avec le mode de réalisation de la figure 7, un traitement de contraste peut s'avérer également avantageux pour générer une information utile pour la régulation de la lampe. Un tel traitement permet notamment de déterminer la présence de brouillard, de buée, etc... , autant de situations où il pourra s'avérer opportun d'accroître la luminosité de la lampe. D'une manière générale, ce traitement du contraste pourra venir utilement en complément d'autres traitements décrits dans la présente demande de brevet.

La **figure 8** illustre plus particulièrement une réalisation où le calcul du contraste est effectué uniquement sur une **zone spécifique d'asservissement (ZSA)** de l'image, lequel procédé démarre par une étape 810 de capture d'image par le capteur 210.

Puis, dans une étape 820, le procédé poursuit par une stockage de ladite image dans la mémoire de stockage.

Puis, dans une étape 830, le procédé poursuit par la détermination de la zone ZSA au moyen du processeur d'images 230.

Puis, dans une étape 840, le procédé poursuit par un calcul de la différence d'intensité moyenne entre les pixels clairs et sombres de la zone ZSA dans l'étape 830 de manière à générer une information représentative du contraste, par exemple la valeur moyenne de celui-ci.

Puis, dans une étape 850, un test est effectué pour comparer la valeur moyenne du contraste au sein de la zone spécifique avec un seuil prédéterminé.

Lorsque la valeur moyenne du contraste au sein de la zone spécifique excède le seuil prédéterminé, le procédé génère, dans une étape 860, une information ou d'un signal de commande destinée à réduire l'intensité lumineuse générée par les LEDs.

Le procédé retourne ensuite à l'étape 810 pour la capture d'une nouvelle image.

Au contraire, si, lors du test de l'étape 840, la valeur moyenne du contraste dans la zone ZSA est inférieure que le seuil prédéterminé, le procédé poursuit avec une étape 870 visant à générer une information ou un signal de commande destinée à accroître l'intensité lumineuse générée par les LED.

Le procédé retourne ensuite à l'étape 810 pour la capture d'une nouvelle image.

Les exemples des figures 5 à 8 illustrent donc la puissance et la grande flexibilité du procédé d'asservissement et de régulation de la puissance de la lampe, lequel permettra de s'adapter à de multiples situations dans le but d'accroître la précision de l'asservissement et/ou les fonctionnalités de la lampe.

Dans un mode de réalisation particulier, la zone spécifique ZSA qui est calculée notamment dans les étapes 630 et 830 des figures 6 et 8 est déterminée au moyen d'algorithmes complémentaires visant à détecter des objets ou artefacts bien distincts ou des zones spécifiques au sein de l'image.

Dans un mode de réalisation particulier, un algorithme spécifique mis en oeuvre dans un contexte *d'escalade* ou de *spéléologie* permet d'identifier une bande de sur-exposition approximativement verticale, correspondant à l'empreinte de l'image d'une corde sur le capteur CCD. Le procédé conduit alors, dans les étapes 630 et 830 décrites précédemment, à l'exclusion de la zone ZSA des pixels correspondants à la corde sur-exposée et éviter ainsi de venir perturber le procédé de régulation.

Dans un autre mode de réalisation particulier, les étapes 630 et 830 mettent en oeuvre un autre algorithme spécifique identifiant le passage périodique de mains devant le capteur, par exemple lorsque l'utilisateur de la lampe grimpe sur une corde. Dans un tel contexte d'escalade, le traitement d'image effectué par le processeur d'image 230 identifie l'image des mains passant périodiquement devant le capteur et exclut de la zone ZSA les pixels correspondants à ces mains de manière à perturber le moins possible l'asservissement de la lampe.

Les situations d'escalade et/ou de spéléologie ne sont toutefois pas les seules à bénéficier de l'apport significatif résultant du traitement d'images. En effet, dans un autre mode de réalisation qui peut correspondre à une situation plus conventionnelle de "*jogging*" ou de "*randonnée*", le processeur d'images met en oeuvre un algorithme de reconnaissance spécifique d'objets, tels que des phares de voitures ou toute autre source externe de manière, une fois encore, à exclure de la zone ZSA les pixels correspondants à ces mêmes objets.

Dans un autre mode de réalisation, les étapes 630 et 830 mettent en oeuvre un autre algorithme spécifique destiné à l'identification d'artefacts de type "neige" au sein de l'image de manière à exclure les pixels correspondants de la zone ZSA qui, en raison de leur sur-exposition au flux lumineux pourraient venir perturber la régulation de la lampe. Dans un mode de réalisation, lors de la reconnaissance de neige, le procédé procède à la désactivation du système d'asservissement et passe ainsi à un mode statique.

Comme on le voit, les possibilités de la lampe dotée d'un capteur imageant sont par conséquent multiples, et un homme du métier pourra adapter l'enseignement de la présente invention à bien des situations pratiques et concrètes.

D'une manière générale, dans un mode de réalisation particulier, afin de rendre plus conviviale l'utilisation du capteur imageant, les algorithmes de détection d'objet et plus généralement le traitement d'images effectué par le processeur 230 sont mis en oeuvre uniquement lors de l'activation d'un paramétrage correspondant à divers **profils** prédéterminés, dont à titre d'illustration un profil "escalade/spéléologie" que l'utilisateur pourra activer ou non préalablement à l'utilisation de la lampe. De manière spécifique, l'activation du profil "spéléologie" pourra être effectué via le port USB 280 ou par tout moyen de communication équivalent.

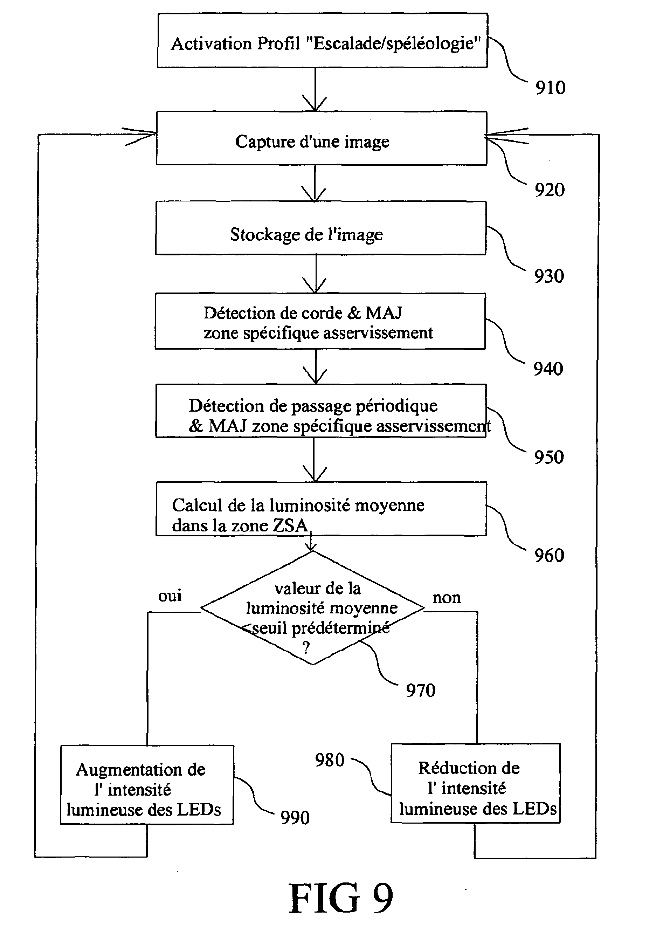

La **figure 9** illustre plus précisément un tel procédé de commande de la lampe, utilisable dans un premier profil, dit d'escalade ou de spéléologie.

Dans une étape 910, le procédé démarre par l'activation du profil correspondant, notamment lors de la configuration de la lampe via un terminal externe (ordinateur portable, téléphone intelligent etc...).

Puis, dans une étape 920 le procédé poursuit par une capture d'image au moyen du capteur d'images 210.

Puis, dans une étape 930, le procédé poursuit par une stockage de ladite image dans la mémoire de stockage.

Puis, dans une étape 940, le procédé poursuit par la mise en oeuvre d'un algorithme de détection de corde visant à identifier, au sein de l'image pixélisée, une bande approximativement verticale de pixels largement sur-exposée. Une fois identifiée, les pixels représentatifs de cette bande sont alors soustraits de la zone spécifique d'asservissement (ZSA) qui est alors mise à jour.

Puis, dans une étape 950, le procédé poursuit par la mise en oeuvre d'un algorithme opérant un traitement collectif d'images successives de manière à identifier le passage périodique de mains devant le capteur 210. Une fois identifié, les pixels correspondants sont également exclus de la zone ZSA.

Une fois la zone ZSA définie, le procédé poursuit par le calcul, au cours d'une étape 960, de la valeur de la luminosité moyenne au sein de la zone ZSA.

Puis, dans une étape 970, un test est effectué par le processeur d'images de manière à comparer la valeur moyenne de la luminosité par rapport à un seuil prédéterminé (fixé par l'activation du profil déterminé).

Lorsque la valeur moyenne de la luminosité excède le seuil prédéterminé, le procédé poursuit avec une étape 980, où une information ou un signal de commande est généré et transmis au module de puissance de manière à réduire l'intensité lumineuse générée par les LEDs.

Le procédé retourne ensuite à l'étape 920 pour la capture d'une nouvelle image.

Si, lors du test de l'étape 970, la valeur moyenne du contraste apparaît inférieure au seuil prédéterminé, le procédé poursuit avec une étape 990 au cours de laquelle ladite unité de commande 240 génère une information ou un signal de commande destiné à augmenter l'intensité lumineuse générée par les LED.

Le procédé retourne ensuite à l'étape 920 pour la capture d'une nouvelle image.

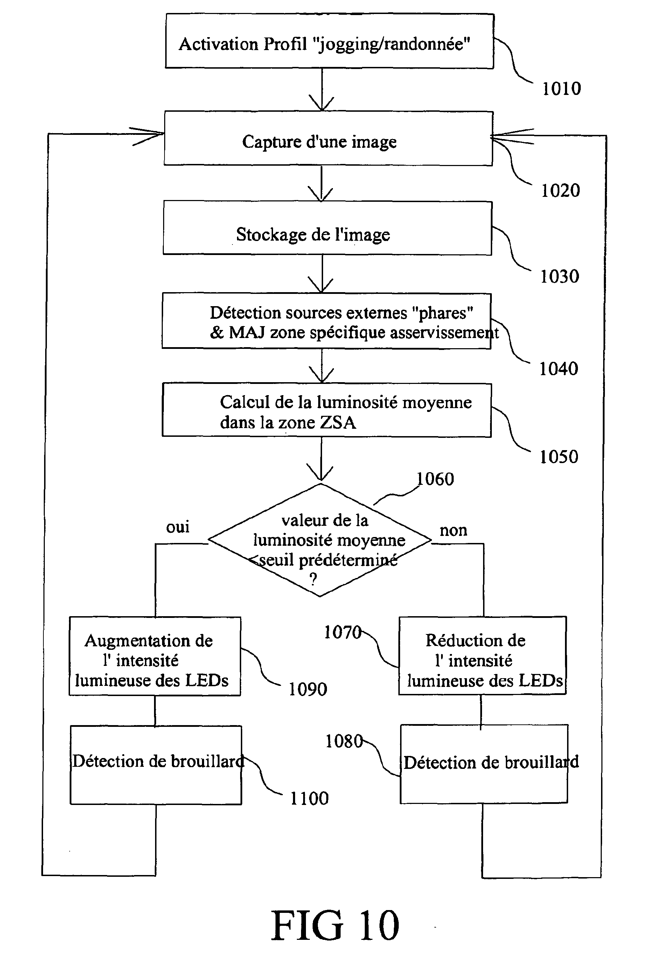

La **figure 10** illustre plus précisément un procédé de commande de la lampe utilisable dans un second profil, de type "*jogging*/*randonnée*".

Dans une étape 1010, le procédé démarre par l'activation du profil correspondant qui, comme précédemment, pourra être effectué via un dispositif externe à la lampe, tel qu'un ordinateur, un téléphone intelligent etc...

Puis, dans une étape 1020 le procédé poursuit par une capture d'image au moyen du capteur d'images 210.

Puis, dans une étape 1030, le procédé poursuit par une stockage de ladite image dans la mémoire de stockage.

Puis, dans une étape 1040, le procédé poursuit par la mise en oeuvre d'un algorithme de détection de sources externes, comme par exemple des phares de voitures pouvant être identifiés au moyen de la détection de deux disques lumineux au sein de l'image pixélisée. Une fois identifiée, les pixels représentatifs de ces disques sont alors soustraits de la zone spécifique d'asservissement (ZSA) qui est alors mise à jour.

Puis, dans une étape 1050, le procédé poursuit par le calcul de la luminosité moyenne au sein de la zone ZSA.

Puis, dans une étape 1060, un test est effectué par le processeur d'images de manière à comparer la valeur moyenne de la luminosité par rapport à un seuil prédéterminé (fixé par l'activation du profil "*jogging*/*randonnée*" déterminé)*.*

Lorsque la valeur moyenne de la luminosité excède le seuil prédéterminé, le procédé poursuit avec une étape 1070, où un premier résultat est généré par le processeur d'images visant à réduire la puissance des LEDs.

Le procédé poursuit ensuite, au cours d'une étape 1080 par un algorithme de détection de brouillard, notamment basé sur une analyse de contraste telle que décrite précédemment, de manière à venir apporter un élément de correction, positif ou négatif, au premier résultat généré dans l'étape précédente, et produire enfin l'information ou le signal de commande à destination du module de puissance 100.

Le procédé retourne ensuite à l'étape 1020 pour la capture d'une nouvelle image.

Si, lors du test de l'étape 1060, la valeur moyenne du contraste apparaît inférieure au seuil prédéterminé, le procédé poursuit avec une étape 1090, où un second résultat est généré par le processeur d'images, visant à accroître la puissance d'émission des LEDs.

Le procédé poursuit ensuite, au cours d'une étape 1100 par un algorithme de détection de brouillard, similaire à celui de l'étape 1080, de manière à venir apporter un élément de correction, et produire enfin l'information ou le signal de commande à destination du module de puissance 100.

Le procédé retourne ensuite à l'étape 1020 pour la capture d'une nouvelle image.

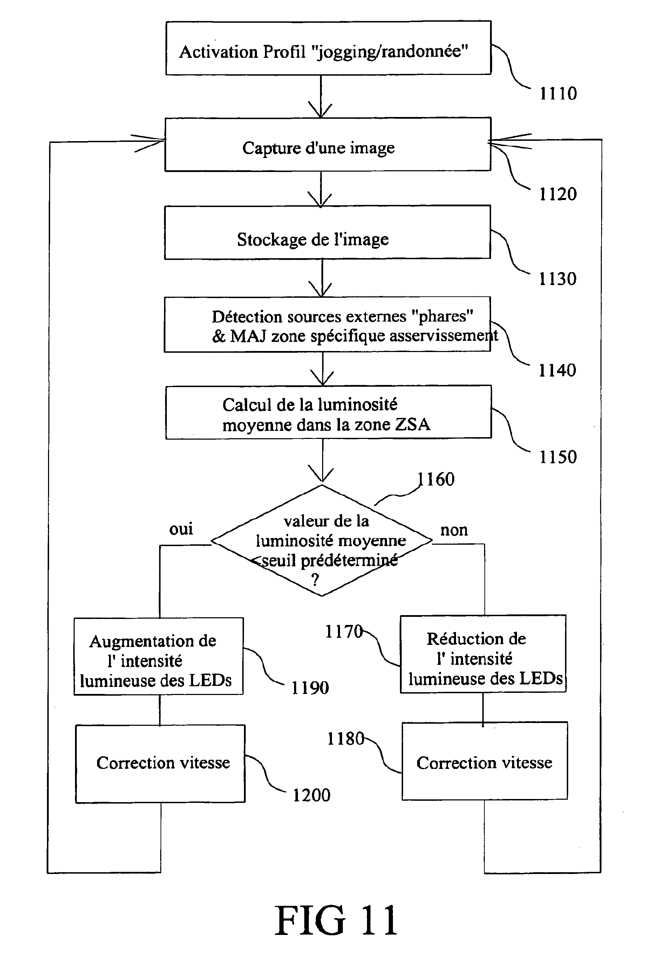

En référence à la **figure 11****,** l'on décrit à présent une variante du procédé de la figure 10 venant intégrer, à la place d'une détection de brouillard/buée, une détection de vitesse destinée à corriger le processus d'asservissement.

En effet, les inventeurs se sont aperçus qu'on pouvait judicieusement améliorer la régulation de la lampe en procédant à un accroissement de la luminosité lorsque le porteur de la lampe est en situation de mouvement, notamment rapide. Au contraire, dans une activité plus statique, le procédé pourra réduire quelque peu la consommation électrique de manière à prolonger la durée de vie de la batterie.

Les étapes 1110 à 1160 correspondent rigoureusement aux étapes 1010 à 1060 et ne seront par conséquent, dans un souci de concision, pas décrits plus avant.

Lorsque, lors du test de l'étape 1160, la valeur moyenne de la luminosité excède le seuil prédéterminé, le procédé poursuit avec une étape 1170, où un premier résultat est généré par le processeur d'images visant à réduire la puissance des LEDs.

Le procédé poursuit ensuite, au cours d'une étape 1180 par un algorithme de détection de vitesse, qui pourra être basé sur divers critères. Suivant un premier critère, l'on procède à une analyse d'images, notamment une analyse de renouvellement des pixels en bordure d'image par rapport aux pixels se situant au centre de l'image. Dans une telle situation, l'algorithme renverra une information représentative d'une vitesse. Alternativement, l'on pourra introduire au sein de la lampe un capteur de vitesse indépendant, un accéléromètre (notamment de type Piezzo intégré au sein d'une puce électronique telle qu'une puce MEMS (Micro Electro-Mechanical Systems) voire une puce Global Positioning System (GPS) visant à apporter une information liée à la vitesse de déplacement de la lampe. Dans l'étape 1180, lorsque l'algorithme détermine un déplacement significatif de la lampe, le premier résultat généré par le processeur d'images 230 est corrigé par une information supplémentaire visant à introduire un accroissement relatif de la luminosité.

Le procédé retourne ensuite à l'étape 1020 pour la capture d'une nouvelle image.

Si, lors du test de l'étape 1160, la valeur moyenne du contraste apparaît inférieure au seuil prédéterminé, le procédé poursuit avec une étape 1190, où un second résultat est généré par le processeur d'images, visant à accroître la puissance d'émission des LEDs.

Le procédé poursuit ensuite, au cours d'une étape 1200 par un algorithme de détection de vitesse visant, comme auparavant dans l'étape 1180, à corriger le second résultat généré par le processeur d'images et produire en fin de compte une information ou une signal de commande à destination du module de puissance 100.

Le procédé retourne ensuite à l'étape 1020 pour la capture d'une nouvelle image.

Les modes de réalisation décrits en référence aux figures 3-11 n'ont d'autre but que d'apporter une démonstration des multiples possibilités qui sont offertes par l'introduction d'un processeur d'images 230 au sein de la lampe frontale (dans l'exemple considéré).

De multiples autres réalisations sont possibles.

En particulier, les inventeurs ont découverts qu'il était possible, et cela de manière parfaitement indépendante du processeur d'images, de rendre plus effective la détection de brouillard, de fumée ou de buée, et ce au moyen d'un LED infra-roouge (IR) ayant un axe sensiblement désaxé (vers le haut) par rapport à l'axe principal des LEDs de puissance émettant dans le domaine visible.

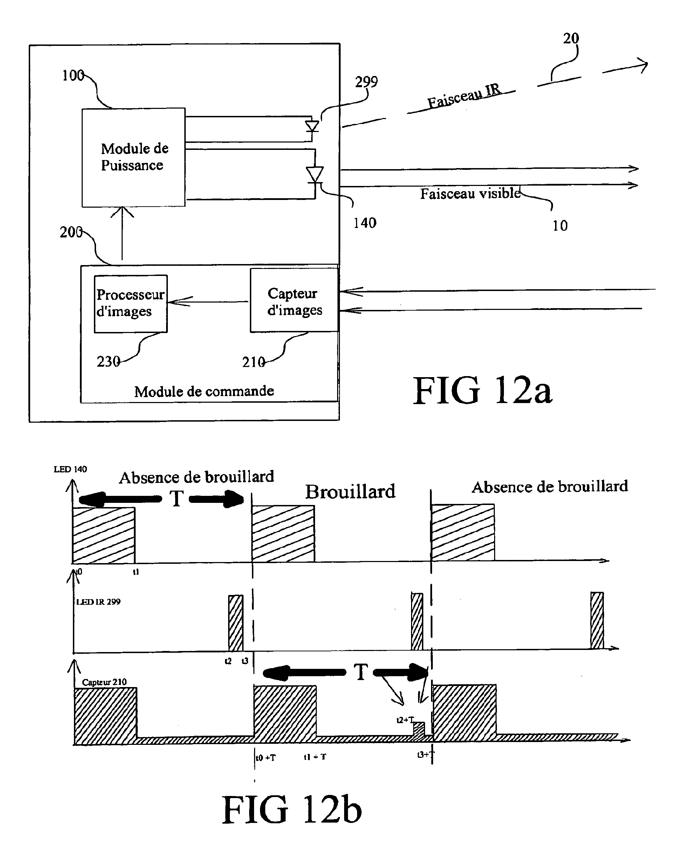

La figure 12a illustre un mode de réalisation de cette lampe qui comporte un module de puissance 100 permettant d'alimenter une ou plusieurs LEDs de puissance (seule la LED 140 étant illustrée) ainsi qu'une LED infra-rouge 299 susceptible de générer un faisceau IR suivant un axe 20 légèrement désaxé par rapport à l'axe 10 supposé horizontal de la LED 140.

Le module de commande 200 comporte, comme dans la réalisation de la figure 2, un capteur d'image 210 générant des images à destination du processeur d'image 230 qui, dans cette réalisation particulière est capable de percevoir une information dans le spectre de l'infrarouge.

L'on décrit à présent la manière d'utiliser le mode de réalisation de la figure 12a, en relation avec les diagrammes temporels de la figure 12b.

La figure 12b illustre, de haut en bas, le signal d'émission de la LED140, le signal d'émission de la LED infra-rouge 299 et une représentation de la luminosité perçue par le capteur d'image 210. La période T du signal PWM est indiqué sur les figures où l'on voit la périodicité des trains de pulses PWM du signal lumineux générés par la LED 140, notamment entre les temps [t₀,t₁], [t₀+T, t₁+T], [t₀+2T, t₁+2T] etc... L'on observe également que le module de puissance (commandé par le module de commande 100) génère également un courant l'alimentation de la diode IR 299 entre les temps [t₂,t₃], [t₂+T, t₃+T], [t₂+2T, t₃+2T] intervenant à un moment où aucune lumière visible n'est transmise par la diode de puissance 140.

Le procédé comporte plus spécifiquement les étapes suivantes:
- génération d'une lumière visible via la ou les lampes de puissance Led suivant une modulation MLI;
- génération d'un flux IR hors l'émission de lumière visible;
- capture du signal réfléchi lors de l'émission du flux IR;
- comparaison dudit signal réfléchi avec un seuil prédéterminé et, lorsque le signal réfléchi est supérieur au seuil, détermination de brouillard, de buée ou de particules de fumée.

Le diagramme temporel montre que le signal perçu par le capteur d'image 210, lequel signal fait apparaître un pic [t₂+T, t₃+T] lorsque du brouillard ou de la fumée provoque un réfléchissement partiel de la lumière IR généré par le capteur. De cette manière, le processeur d'image peut discriminer une situation en présence de brouillard ou de particules (buée, fumée) et une situation exempte de brouillard.

L'utilisation d'un tel procédé peut être avantageusement faite lors des étapes 1080 et 1100 des procédés décrits dans les figures 10 et 11, respectivement.

Il est à noter que le diagramme de la figure 12b n'est qu'un premier mode de réalisation particulier. Dans un second mode de réalisation on pourra également envisager la génération, simultanée, d'un flux IR et du flux de lumière visible, en sorte que le capteur d'image percevra indistinctement l'image visible et le pic d'infrarouge réfléchi par la buée et/ou la vapeur d'eau. Dans ce second mode de réalisation, l'on prévoira, au sein du traitement d'images, des moyens de filtrage pour détecter le retour du pic d'infrarouge et détecter la présence de brouillard, de fumée ou de buée

## Revendications

1. Lampe frontale comportant
- une source lumineuse comportant une ou plusieurs diodes de type LED (140);
- un module de puissance (100) pour générer une alimentation électrique de ladite source lumineuse, ledit module étant commandé par une information ou un signal de commande;
- un module de commande (200) pour le réglage de l'intensité lumineuse générée par ladite source lumineuse;
**caractérisée en ce que** ledit module de commande comporte un capteur d'image (210) générant au moins une image de la zone éclairée par ladite source lumineuse et des moyens de traitement (230) de ladite image dans le but de générer ladite information ou ledit signal de commande.

2. Lampe frontale selon la revendication 1 **caractérisée en ce que** lesdits moyens de traitement déterminent une zone spécifique d'asservissement (ZSA) au sein de ladite image, et faisant l'objet d'un traitement d'images de manière à générer ladite information de commande ou ledit signal de commande.

3. Lampe frontale selon la revendication 1 **caractérisée en ce que** lesdits moyens de traitement comportent un processeur d'images effectuant un calcul de la luminosité moyenne des pixels représentatifs de ladite image à des fins de comparaison à un seuil dans le but de générer ladite information ou ledit signal de commande.

4. Lampe frontale selon la revendication 1 **caractérisée en ce que** ledit processeur d'images effectue une analyse de contraste sur ladite image dans le but d'une détection de brouillard, de buée et/ou de particules de fumée.

5. Lampe frontale selon les revendications 2 et 3 **caractérisée en ce que** ledit processeur d'images effectue la détection d'une bande de pixels de luminosité supérieure à un seuil, approximativement verticale, les pixels correspondant à ladite bande de pixel étant exclus de la dite zone spécifique d'exposition déterminée par ledit processeur d'image.

6. Lampe frontale selon les revendications 2 et 3 dans laquelle ledit processeur d'image permet la détection d'un passage périodique de mains, dont les pixels sont exclus de ladite zone spécifique d'exposition déterminée par ledit processeur d'image.

7. Lampe frontale selon les revendications 2 et 3 dans laquelle ledit processeur d'images permet la détection de phares automobiles dont les pixels sont exclus de ladite zone spécifique d'exposition déterminée par ledit processeur d'image.

8. Lampe frontale comportant:
- une source lumineuse comportant une ou plusieurs diodes de type LED (140);
- un module de puissance (100) pour générer une alimentation électrique de ladite source lumineuse, ledit module étant commandé par une information ou un signal de commande;
- un module de commande (200) pour le réglage de l'intensité lumineuse générée par ladite source lumineuse;
**caractérisée en ce qu'**elle comporte en outre:
- au moins une lampe infra-rouge (299) comportant un axe décentré par rapport à l'axe de ladite source lumineuse;
- des moyens de commande (100) de ladite lampe IR de manière à générer un faisceau IR;
- des moyens de détection (210) d'une lumière infra-rouge réfléchie, ledit module de commande dérivant de ladite détection de lumière IR réfléchie une information représentative de la présence de brouillard, de buée et/ou de particules de fumée à destination dudit module de commande.

9. Lampe frontale selon l'une des revendications précédentes **caractérisée en ce qu'**elle comporte un second capteur générant une seconde information représentative de l'intensité lumineuse réfléchie de la zone éclairée, la commande de ladite source lumineuse résultant conjointement dudit traitement numérique des pixels et de ladite seconde information de réflexion.

10. Lampe frontale selon l'une des revendications précédentes comportant des moyens de détection de flocons de neige pour déterminer la zone spécifique d'asservissement utilisée pour la génération de ladite information ou dudit signal de commande.

11. Lampe frontale selon l'une des revendications précédentes dans laquelle les moyens de traitement comporte des moyens de configuration de la lampe, notamment suivant un ou plusieurs profils prédéterminés.

12. Lampe frontale selon la revendication 11 **caractérisée en ce que** ladite configuration est effectuée au moyen d'un port USB permettant la communication avec un ordinateur, une tablette tactile, ou un téléphone intelligent.

13. Lampe frontale selon la revendication 12 **caractérisée en ce qu'**elle comporte au moins:
- un premier profil dit "escalade/spéléologie" mettant en oeuvre un ou plusieurs algorithmes de détection de corde;
- un second profil mettant en oeuvre un ou plusieurs algorithmes de détection d'objets tel que des phares automobiles.

14. Procédé de réglage de l'intensité lumineuse générée par une lampe frontale comportant une ou plusieurs diodes LED, un module de puissance commandable pour l'alimentation électrique des lampes LEDs et un module de commande pour le réglage de l'intensité lumineuse générée par la lampe, ledit procédé comportant les étapes suivantes:
- la génération (310, 410, 510, 610) d'une image de la zone éclairée par la lampe au moyen d'un capteur d'images;
- le stockage de ladite image (320, 420, 520, 620) au sein d'une mémoire de stockage;
- le traitement (330, 440, 530, 640) de ladite image en vue de générer une information ou un signal de commande dudit module de puissance.

15. Procédé suivant la revendication 14 **caractérisé en ce qu'**il comporte les étapes:
- calcul (530, 640) de la luminosité moyenne des pixels de ladite image ou d'une zone spécifique d'asservissement de ladite image ;
- la comparaison (540, 650) du résultat dudit calcul avec un seuil prédéterminé;
- la génération (560, 670) d'une information ou d'un signal de commande destiné à accroître l'intensité lumineuse des LED lorsque ledit résultat est inférieur au seuil prédéterminé;
- la génération (550, 660) d'une information ou d'un signal de commande destiné à réduire l'intensité lumineuse des LED lorsque ledit résultat est supérieur au seuil prédéterminé.

## Patentansprüche

1. Stirnlampe mit
- einer Lichtquelle mit einer oder mehreren Leuchtdioden (140);
einem Leistungsmodul (100) zur elektrischen Versorgung der Lichtquelle, das von einer Information oder einem Steuersignal gesteuert wird;
- einem Steuermodul (200) zur Regulierung der von der Lichtquelle erzeugten Lichtintensität; **gekennzeichnet dadurch, dass** das Steuermodul einen Bildsensor (210) umfasst, der mindestens ein Bild des von der Lichtquelle beleuchteten Bereichs erzeugt, und Mittel zur Verarbeitung (230) dieses Bildes mit dem Ziel, besagte Information oder besagtes Steuersignal zu erzeugen.

2. Stirnlampe nach Anspruch 1, **gekennzeichnet dadurch, dass** die Mittel zur Verarbeitung einen spezifischen Regelbereich (ZSA) innerhalb des Bildes bestimmen, als Gegenstand einer Bilderverarbeitung, um besagte Steuerinformation oder besagtes Steuersignal zu erzeugen.

3. Stirnlampe nach Anspruch 1, **gekennzeichnet dadurch, dass** die Mittel zur Verarbeitung einen Bildprozessor umfassen, der eine Berechnung der durchschnittlichen Helligkeit der für das Bild repräsentativen Pixel zum Vergleich mit einem Schwellenwert ausführt mit dem Ziel, besagte Information oder besagtes Steuersignal zu erzeugen.

4. Stirnlampe nach Anspruch 1, **gekennzeichnet dadurch, dass** der Bildprozessor eine Kontrastanalyse auf dem Bild durchführt, um Nebel, Dampf und/oder Rauchpartikel zu ermitteln.

5. Stirnlampe nach den Ansprüchen 2 und 3, **gekennzeichnet dadurch, dass** der Bildprozessor ein ungefähr senkrechtes Pixelband mit Helligkeit oberhalb eines Schwellenwerts ermittelt, wobei die Pixel dieses Pixelbands von dem genannten vom Bildprozessor bestimmten spezifischen Belichtungsbereich ausgeschlossen sind.

6. Stirnlampe nach den Ansprüchen 2 und 3, wobei der Bildprozessor die Ermittlung von zeitweise vorbeistreifenden Händen gestattet, deren Pixel von besagtem vom Bildprozessor bestimmten spezifischen Belichtungsbereich ausgeschlossen sind.

7. Stirnlampe nach den Ansprüchen 2 und 3, wobei der Bildprozessor die Ermittlung von Autoscheinwerfern gestattet, deren Pixel von besagtem vom Bildprozessor bestimmten spezifischen Belichtungsbereich ausgeschlossen sind.

8. Stirnlampe mit:
- einer Lichtquelle mit einer oder mehreren Leuchtdioden (140);
einem Leistungsmodul (100) zur elektrischen Versorgung der Lichtquelle, das von einer Information oder einem Steuersignal gesteuert wird;
- einem Steuermodul (200) zur Regulierung der von der Lichtquelle erzeugten Lichtintensität; **dadurch gekennzeichnet, dass** sie außerdem folgendes umfasst:
- mindestens eine Infraschalllampe (299) mit im Vergleich zur Achse der Lichtquelle dezentraler Achse;
- Steuermittel (100) der IR-Lampe, um einen IR-Strahl zu erzeugen;
- Mittel zur Ermittlung (310) eines reflektierten Infrarotlichts, wobei das Steuermodul aus der Ermittlung von reflektiertem Infrarotlicht eine repräsentative Information über das Vorhandensein von Nebel, Dampf und/oder Rauchpartikeln für das Steuermodul ableitet.

9. Stirnlampe nach einem der vorhergehenden Ansprüche, **dadurch gekennzeichnet, dass** sie einen zweiten Sensor umfasst, der eine zweite repräsentative Information für die reflektierte Lichtintensität des beleuchteten Bereichs erzeugt, so dass die Steuerung der Lichtquelle sowohl auf der genannten digitalen Verarbeitung der Pixel und besagter zweiter Reflexionsinformation basiert.

10. Stirnlampe nach einem der vorhergehenden Ansprüche mit Mitteln zur Ermittlung von Schneeflocken, um den spezifischen Regelbereich für die Erzeugung von besagter Information oder des genannten Steuersignals zu bestimmen.

11. Stirnlampe nach einem der vorhergehenden Ansprüche, wobei die Mittel zur Verarbeitung Mittel zur Konfiguration der Lampe umfassen, insbesondere nach einem oder mehreren vorgegebenen Profilen.

12. Stirnlampe nach Anspruch 11, **gekennzeichnet dadurch, dass** besagte Konfiguration mittels eines USB-Anschlusses durchgeführt wird, wodurch die Kommunikation mit einem Computer, einem Touchscreen oder einem Smartphone ermöglicht wird.

13. Stirnlampe nach Anspruch 12, **dadurch gekennzeichnet, dass** sie mindestens folgendes umfasst:
- ein erstes Profil namens "Klettern/Höhlenforschung" mit einem oder mehreren Algorithmen zur Seil-Ermittlung,
- ein zweites Profil mit einem oder mehreren Algorithmen zur Ermittlung von Gegenständen wie Autoscheinwerfern.

14. Verfahren zur Regulierung der von einer Stirnlampe mit einer oder mehreren Leuchtdioden erzeugten Lichtintensität, mit einem steuerbaren Leistungsmodul für die elektrische Versorgung der LED-Lampen und einem Steuermodul für die Regulierung der von der Lampe erzeugten Lichtintensität, wobei das Verfahren die folgenden Schritte umfasst:
- die Erzeugung (310, 410, 510, 610) eines Bildes des von der Lampe beleuchteten Bereichs mittels eines Bildsensors;
- die Speicherung des Bildes (320, 420, 520, 620) in einem Speicher;
die Verarbeitung (330, 440, 530,640) des Bildes, um eine Information oder ein Steuersignal für das Leistungsmodul zu erzeugen.

15. Verfahren nach Anspruch 14, **gekennzeichnet dadurch, dass** es folgende Phasen umfasst:
Berechnung (530, 640) der durchschnittlichen Helligkeit der Pixel des Bildes oder eines spezifischen Regelbereichs des Bildes;
- Vergleich (540, 650) des Ergebnisses der genannten Berechnung mit einem vorgegebenen Schwellenwert;
- Erzeugung (560, 670) einer Information oder eines Steuersignals, um die Lichtintensität der Leuchtdiode zu steigern, wenn besagtes Ergebnis unterhalb des vorgegebenen Schwellenwerts liegt;
- Erzeugung (550, 660) einer Information oder eines Steuersignals, um die Lichtintensität der Leuchtdiode zu verringern, wenn das Ergebnis oberhalb des vorgegebenen Schwellenwerts liegt.

## Claims

1. Headlamp comprising :
- a light source having one or more LED-type diodes (140);
- a power module (100) for generating electric power for said light source, said module being controlled by an information or a control signal;
- a control module (200) for the adjustment of the light intensity generated by said light source;
**characterized in that** said control module includes an image sensor (210) generating at least one image of the area illuminated by said light source and processing means (230) of said image in order to generate said information or said control signal.

2. Headlamp according to claim 1 **characterized in that** said processing means determines a specific control area (SCA) within said image, and being subject to an image processing so as to generate said control information or said control signal.

3. Headlamp according to claim 1 **characterized in that** said processing means comprises an image processor for calculating the average brightness of the pixels which are representative of said image for purposes of comparison with a threshold in order to generate said control information or said control signal.

4. Headlamp according to claim 1 **characterized in that** said image processor performs a contrast analysis on said image in order to detect fog, mist and / or smoke particles.

5. Headlamp according to claims 2 and 3 **characterized in that** said image processor performs the detection of a stripe of pixels, approximately vertical, showing a brightness higher than a threshold, the pixel corresponding to said pixel stripe being excluded from said specific exposure area determined by said image processor.

6. Headlamp according to claims 2 and 3 wherein said image processor allows the detection of periodic passage of hands, whose pixels are excluded from said specific exposure area determined by said image processor.

7. Headlamp according to claims 2 and 3 wherein said image processor allows the detection of car headlights, whose pixels are excluded from the pixels of said specific exposure area determined by said image processor.

8. Headlamp comprising:
- a light source having one or more LED-type diodes (140);
- a power unit (100) for generating electric power for said light source, said power unit being controlled by a control information or a control signal;
- a control unit (200) for controlling the light generated by said light source; **characterized in that** it further comprises:
- at least one infra-red lamp (299) having an axis offset from the axis of said light source;
- control means (100) of said infrared light to generate an infrared beam;
- means for detecting (210) a reflected infrared light, said control unit deriving from said detection an information representative of the presence of fog, mist and / or smoke particles to be forwarded to said control unit.

9. Headlamp according to anyone of the preceding claims **characterized in that** it comprises a second sensor generating one second information representative of the reflected light intensity of the illuminated area, the control of said light source being derived from both said digital processing of the pixels and from said second reflection information.

10. Headlamp according to anyone of the preceding claims comprising detecting means for detecting snowflakes within the specific control area for the generation of said control information and said control signal.

11. Headlamp according to anyone of the preceding claims wherein the processing means comprises means for configuration of the lamp, in particular according to one or more predetermined profiles.

12. Headlamp according to claim 11 **characterized in that** said configuration is carried out by means of a USB port for communicating with a computer, a touch pad, or a smart phone.

13. Headlamp according to claim 12 **characterized in that** it comprises at least:
- a first profile for "climbing / caving" implementing one or more algorithms for recognition of a rope;
- a second profile to implement one or more algorithms for detecting objects such as automobile headlights.

14. A method for adjusting the light generated by a headlamp comprising one or more LEDs, a controllable power unit for supplying power to the LED lamps and a control unit for controlling the light generated by the lamp, said method comprising the steps of:
- generating (310, 410, 510, 610) an image of the illuminated area of the lamp by means of an image sensor;
- storing said image (320, 420, 520, 620) in a storage memory;
- processing (330, 440, 530, 640) of said image to generate a control information or a control signal to said power unit.

15. A method according to claim 14 **characterized in that** it comprises the steps of:
- calculating (530, 640) of the average brightness of the pixels of said image or a specific control area of said image;
- comparing (540, 650) the result of said calculation with a predetermined threshold;
- generating (560, 670) a control information or a control signal for increasing the light intensity of the LED when said result is less than the predetermined threshold;
- generating (550, 660) a control information or a control signal for reducing the light intensity of the LED when said result exceeds the predetermined threshold.
